# EUROPEAN PATENT APPLICATION

(11) **EP 4 068 709 A1**
(43) Date of publication of application: **05.10.2022**
(21) Application number: 20898901.2
(22) Date of filing: 28.10.2020
(51) Int. Cl.: H04L 12/935

(54) **NETWORK SLICE MESSAGE TRANSMISSION METHOD, ELECTRONIC DEVICE AND STORAGE MEDIUM**

(30) Priority: 12.12.2019 CN 201911273738
(71) Applicant: ZTE Corporation, Shenzhen, Guangdong 518057 (CN)
(72) Inventor: YANG, Yong, Shenzhen, Guangdong 518057 (CN)
(74) Representative: Raynor, Simon Mark
(86) International application number: PCT/CN2020/124556
(87) International publication number: WO 2021/114930

(57) **Abstract**

Embodiments of the present invention relate to the field of communication, and disclose a network slice packet transmission method, an electronic device, and a storage medium. In the present invention, a network slice packet transmission method includes: acquiring a logical interface bound to a first network slice, wherein the logical interface includes at least one derived interface, and the at least one derived interface is at least one interface derived from a first service transmission interface bound to a second network slice; and performing packet transmission of the first network slice using an idle bandwidth of the first service transmission interface via the at least one derived interface.

## Description

### CROSS REFERENCE TO RELATED APPLICATIONS

The present invention claims priority to Chinese patent application No. 201911273738.4, filed December 12, 2019, which is incorporated by reference herein in its entirety.

### TECHNIC FIELD

The various embodiments of the present invention relate in general to communication technology, and more specifically to a network slice packet transmission method, an electronic device and a storage medium.

### BACKGROUND

In 2015, international telecommunication union (ITU) defined three major application scenarios of fifth generation mobile communication technology (5G), i.e., enhanced mobile broadband (eMBB), massive machine type communications (mMTC), and ultra reliable Low latency communications (uRLLC). Facing multi-scene and differential requirements of the 5G era, 5G bearer faces unprecedented opportunities and challenges. Network slicing technology is one of key technologies of the 5G bearer scheme. Flexible Ethernet technology (FlexE) is a core technology of Ethernet slicing. FlexE is an interface technology for bearer network to realize service isolation bearer and network slicing, which decouples a media access control (MAC) layer from a group/physical layer (PHY). FlexE can divide a physical Ethernet port into a plurality of Ethernet elastic hard ducts based on timeslot scheduling, so that the network not only has characteristics of exclusive timeslot and good isolation like time division multiplex (TDM), but also has dual characteristics of Ethernet statistical multiplex and high network efficiency, thereby realizing the statistical multiplexing of services in the same network slice, and the services of different network slices do not affect each other. FlexE can also 'bundle and combine' a plurality of physical ports to form a virtual logical channel to support higher service rate. In some cases, for service applications in certain scenarios, such as service application in a 5G uRLLC scenario, the service bandwidth needs to be configured with peak traffic in order to ensure ultra-reliable and low-latency characteristics, and 1+1 protection, 1:1 protection or 1: n (positive integer) protection technology is used in order to quickly switch between active and standby channels, i.e., a flexible Ethernet service (FlexE Client) interface whose bandwidth is greater than the peak value is created according to the requirement of the network slice, and the interface is bound by one network slice for use.

In some cases, a service transmission interface created by a network slice may only use part of interface bandwidth resources when performing service data transmission, and another part of the interface bandwidth resources cannot be effectively used.

### SUMMARY

Some embodiments of the present invention provide a network slice packet transmission method, including: acquiring a logical interface bound to a first network slice, wherein the logical interface includes at least one derived interface, and the at least one derived interface is at least one interface derived from a first service transmission interface bound to a second network slice; and performing packet transmission of the first network slice using an idle bandwidth of the first service transmission interface via the at least one derived interface.

Some embodiments of the present invention further provide an electronic device including: at least one processor; and memory communicatively coupled to the at least one processor; wherein the memory stores instructions executable by the at least one processor which, when executed by the at least one processor, cause the at least one processor to perform the network slice packet transmission method described above.

Some embodiments of the present invention further provide a computer readable storage medium storing a computer program that, when executed by at least one processor, causes the at least one processor to perform the network slice packet transmission method described above.

### BRIEF DESCRIPTION OF THE DRAWINGS

One or more embodiments are exemplified by corresponding figures in the accompanying drawings, and these exemplary descriptions do not constitute limitation to the embodiments.
FIG. 1 is a flowchart of a network slice packet transmission method according to a first embodiment of the present invention.
FIG. 2 is a schematic diagram of a network slice packet processing method according to a second embodiment of the present invention.
FIG. 3 is a flowchart of a network slice packet transmission method according to the second embodiment of the present invention.
FIG. 4 is a flowchart of a network slice packet transmission method according to a third embodiment of the present invention.
FIG. 5 is a schematic structural diagram of an electronic device according to a fourth embodiment of the present invention.

### DETAILED DESCRIPTION OF THE EMBODIMENTS

In order to make the purposes, technical solutions and advantages of the present invention clearer, the following describes the embodiments of the present invention in detail with reference to the accompanying drawings. Those of ordinary skill in the art should appreciate that many technical details have been proposed in various embodiments of the present invention for reader's better understanding of the present invention. However, the technical solutions claimed in the present invention is able to be realized even without these technical details and various changes and modifications based on the following embodiments. The following embodiments are divided for convenience of description, and shall not constitute any limitation on specific implementations of present invention. The embodiments may be combined with and referenced to each other without conflict.

Embodiments of the present invention are intended to provide a network slice packet transmission method, an electronic device, and a storage medium, so that bandwidth resources of a service transmission interface bound to a network slice are able to be shared in the process of packet transmission, thereby improving the utilization rate of bandwidth resources of the interface.

To solve the above technical problems, embodiments of the present invention provide network slice packet transmission method, including: acquiring a logical interface bound to a first network slice, wherein the logical interface includes at least one derived interface, and the at least one derived interface is at least one interface derived from a first service transmission interface bound to a second network slice; and performing packet transmission of the first network slice using an idle bandwidth of the first service transmission interface via the at least one derived interface.

In some embodiments, performing the packet transmission of the first network slice using the idle bandwidth of the first service transmission interface via the at least one derived interface includes: detecting a packet forwarding weight of each of the at least one derived interface; and performing the packet transmission according to the packet forwarding weight; wherein the packet forwarding weight is an occupancy priority or an occupancy rate to the idle bandwidth of each of the at least one derived interface in the at least one derived interface created by the first service transmission interface. The ratio or priority of the idle bandwidth available by the derived interface is determined according to the packet forwarding weight of the derived interface to perform the packet transmission, which avoids the packet transmission of the service of the second network slice from being affected due to excessive bandwidth occupation of the derived interface.

In some embodiments, detecting the packet forwarding weight of each of the at least one derived interface includes: detecting whether the logical interface includes a plurality of derived interfaces; and acquiring the packet forwarding weight of each of the plurality of derived interfaces in response to the logical interface including the plurality of derived interfaces; and performing the packet transmission according to the packet forwarding weight includes: determining an available transmission bandwidth of each of the plurality of derived interfaces according to the packet forwarding weight of each of the plurality of derived interfaces; selecting at least one derived interface according to the available transmission bandwidth of each of the plurality of derived interfaces; and performing the packet transmission according to the available transmission bandwidth of each of the selected at least one derived interface. The derived interface is selected for the packet transmission according to the bandwidth available by the derived interface and the bandwidth required by the network slice, which avoids efficiency and stability of the packet transmission from being affected by insufficient bandwidth available by the derived interface.

In some embodiments, after acquiring the logical interface bound to the first network slice, the method further includes: detecting whether the logical interface further includes a second service transmission interface; and preferentially performing the packet transmission via the second service transmission interface in response to the logical interface comprising the second service transmission interface. The stability of the packet transmission is ensured by preferentially using the service transmission interface bound to the network slice for the packet transmission.

In some embodiments, preferentially performing the packet transmission via the second service transmission interface includes: detecting whether a real-time bandwidth utilization rate of the second service transmission interface is less than a first preset threshold; performing the packet transmission only via the second service transmission interface in response to the real-time bandwidth utilization rate of the second service transmission interface being less than the first preset threshold; and performing the packet transmission via both the second service transmission interface and the at least one derived interface in response to the real-time bandwidth utilization rate of the second service transmission interface being greater than or equal to the first preset threshold. By changing the packet transmission mode according to the real-time bandwidth utilization rate of the bound service transmission interface, the stability of the packet transmission is ensured and the efficiency of the packet transmission is improved.

In some embodiments, before performing the packet transmission, the method further includes: detecting whether a real-time bandwidth utilization rate of a packet transmission interface is greater than a second preset threshold, wherein the packet transmission interface includes one or both of the second service transmission interface and the at least one derived interface for the packet transmission; maintaining a current packet transmission rate of the packet transmission interface in response to the real-time bandwidth utilization rate of the packet transmission interface being greater than the second preset threshold; and performing delayed transmission on packets to be transmitted. By carrying out a corresponding mode of the packet transmission according to the bandwidth utilization rate of the packet transmission interface, packet loss in the process of the packet transmission is avoided and the quality of the packet transmission is improved.

In some embodiments, buffering the packets to be transmitted into the pre-created packet buffer includes: storing the packets to be buffered into respective buffer sub-intervals corresponding to the packets according to characteristic data of the packets and correspondences between preset types of the characteristic data and the buffer sub-intervals, wherein the buffer sub-intervals are N sub-intervals generated in advance in the pre-created packet buffer according to the preset types of the characteristic data of the packets, each of the buffer sub-intervals is configured with a preset read weight, and N is an integer greater than 1; and transmitting packets in each of the buffer sub-intervals in the buffering order according to the preset read weight of each of the buffer sub-intervals in response to detecting that the real-time bandwidth utilization rate being less than or equal to the second preset threshold; wherein the preset read weight is a percentage of packets able to be transmitted of each of the buffer sub-intervals in single data transmission or a packet transmission priority of each of the buffer sub-intervals in the single data transmission. The packet buffering is performed according to the characteristic data of the packets, and the buffered packets are transmitted according to the read weights of the packets in the buffer sub-intervals, which ensures priority transmission of important packets.

A first embodiment of the present invention relates to a network slice packet transmission method. In this embodiment, a logical interface bound to a first network slice is acquired, and the logical interface includes at least one derived interface. The at least one derived interface is at least one interface derived from a first service transmission interface bound to a second network slice. Packet transmission of the first network slice is performed using an idle bandwidth of the first service transmission interface via the at least one derived interface. The derived interface is created for the first service transmission interface bound to the second network slice, and the first network slice performs the packet transmission via the bound derived interface by using the bandwidth of the first service transmission interface that is not occupied by the service of the second network slice, so that the bandwidth resources of the first service transmission interface are shared, and the bandwidth resource utilization rate of the first service transmission interface is improved.

The implementation details of the method in this embodiment are described in detail below, and the following content is merely intended to facilitate understanding of the provided implementation details, which is not necessary for this embodiment.

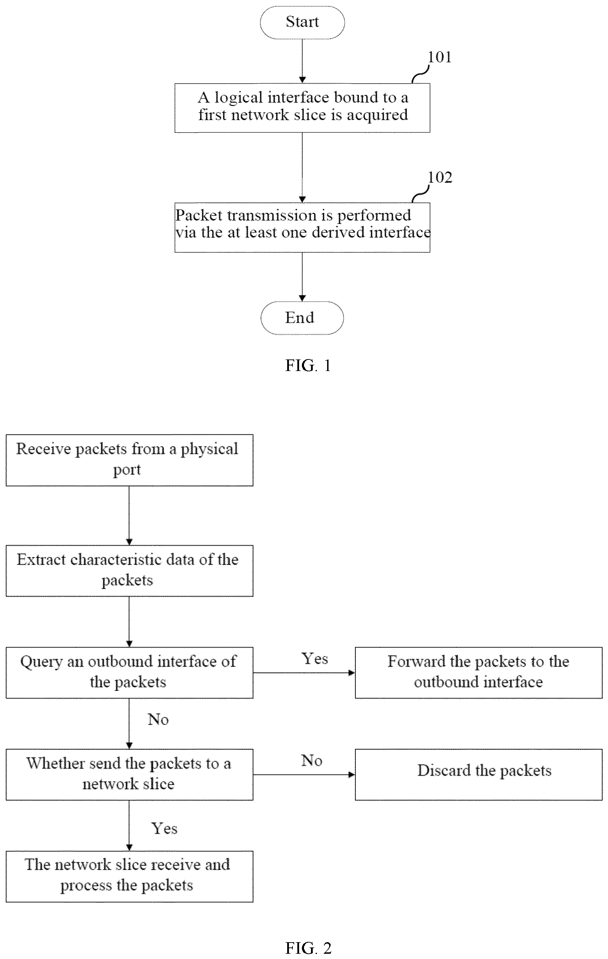

A specific flowchart of the network slice packet transmission method in this embodiment is shown in FIG. 1, which includes the following operations.

In 101, a logical interface bound to a first network slice is acquired.

Specifically, before packet transmission of the first network slice is performed, a terminal detects the first network slice to acquire a logical interface bound to the first network slice. The logical interface includes at least one derived interface. The at least one derived interface is at least one interface derived from a first service transmission interface bound to a second network slice.

In an example, before the packet transmission of the first network slice is performed, the terminal detects the logical interface bound to the first network slice, and determines that the derived interface is included in the logical interface bound to the first network slice. The derived interface is an interface pre-derived from the first service transmission interface bound to the second network slice. The derived interface created for the first service transmission interface may be one or more. The at least one derived interface shares the interface bandwidth of the first service transmission interface and is attached to the first service transmission interface. When the first service transmission interface is deleted, the derived interface created by the first service transmission interface is deleted accordingly and is unbale to be used to bind with the network slice, nor able to be used by the pre-bound network slice for the packet transmission, nor able to receive packets transmitted by a service configuration port to the network slice via the derived interface. Specifically, the derived interface may be created from the first service transmission interface in the following manner. First, an identifier is established for the derived interface. Then, a slot bandwidth that is able to occupy the first service transmission interface is allocated to the derived interface, and the derived interface is bound to the first service transmission interface, i.e., a mapping relationship between the derived interface and the first service transmission interface is established. The mapping relationship between the derived interface and the first service transmission interface is then transmitted to a forwarding unit at a bottom layer, so that the forwarding unit performs the packet transmission via the derived interface according to the mapping relationship between the derived interface and the service transmission interface and the bandwidth resource of the service transmission interface occupied by the derived interface.

In 102, packet transmission is performed via the at least one derived interface.

Specifically, after the logical interface of the first network slice is detected, the derived interface bound to the first network slice is determined, and the packet transmission of the first network slice is performed by using the idle bandwidth of the first service transmission interface via the derived interface.

In an example, after it is detected that the first network slice is bound to a derived interface of the first service transmission interface bound to the second network slice, a packet forwarding weight of the derived interface is detected, and the packet transmission is performed according to the packet forwarding weight. The packet forwarding weight is an occupancy priority or an occupancy ratio to the idle bandwidth of the derived interface in all derived interfaces created by the first service transmission interface. For example, the service transmission interface of the second network slice creates two derived interfaces, i.e., a derived interface 1 and a derived interface 2. When the packet forwarding weight is the occupation priority to the idle bandwidth, and the occupation priority to the idle bandwidth of the derived interface 1 is higher than the occupation priority to the idle bandwidth of the derived interface 2, the bandwidth required for the packet transmission of the network slice bound to the derived interface 1 is first obtained, and the idle bandwidth of the first service transmission interface is preferentially handed over to the network slice bound to the derived interface 1 for use according to the detected bandwidth required by the network slice bound to the derived interface 1, and the maximum bandwidth that the derived interface 2 is able to occupy is the idle bandwidth not occupied by the derived interface 1. When the packet forwarding weight is the occupancy ratio to the idle bandwidth, and the occupancy ratios to the idle bandwidth of the derived interface 1 and the derived interface 2 are 60% and 40%, respectively, in a case where both the derived interface 1 and the derived interface 2 perform full-load packet transmission, the derived interface 1 occupies 60% of the idle bandwidth of the first service transmission interface for the packet transmission, and the derived interface 2 occupies only 40% of the idle bandwidth for the packet transmission. When a derived interface occupies less bandwidth than the maximum bandwidth in the occupancy ratio to the idle bandwidth, the remaining idle bandwidth is able to be used by the remaining derived interfaces.

In another example, after the logical interface bound to the first network slice is acquired, it is detected whether the logical interface includes a plurality of derived interfaces. A packet forwarding weight of each of plurality of derived interfaces is obtained in response to the logical interface including the plurality of derived interfaces. Performing the packet transmission according to the packet forwarding weight includes the following operations. That is, an available transmission bandwidth of each derived interface is determined according to the packet forwarding weight of each derived interface, at least one derived interface is selected according to the available transmission bandwidth of each derived interface, and the packet transmission is performed according to the available transmission bandwidth of each of the selected at least one derived interface. For example, it is detected that the first network slice is bound with three derived interfaces. For each of the three derived interfaces, an available bandwidth of the derived interface is obtained according to a packet forwarding weight of the derived interface in all derived interfaces created by the service transmission interface corresponding to the derived interface. An available bandwidth of a derived interface 1 is 3G, an available bandwidth of a derived interface 2 is 4G, and an available bandwidth of the derived interface 3 is 2G. In response to the bandwidth required by the first network slice for packet transmission being 3.5G, the derived interface 2 is selected for the packet transmission. In response to the bandwidth required by the first network slice for packet transmission is 4.5G, any one of three combinations of the derived interface 1 and the derived interface 3, the derived interface 2 and the derived interface 3, the derived interface 1 and the derived interface 2 is selected for the packet transmission.

In actual application, the derived interface is selected according to the bandwidth required for the packet transmission of the network slice, so as to meet the requirement for the packet transmission of the network slice. The method for selecting the derived interface is not limited in this embodiment.

When the packet transmission of the first network slice is performed, the bandwidth resource of the first service transmission interface bound to the second network slice is occupied, and the first service transmission interface may create a plurality of derived interfaces. Therefore, when the packet transmission is performed at the first service transmission interface and the derived interfaces created by the first service transmission interface, the bandwidth resources of the first service transmission interface are also allocated according to the packet forwarding weights of the first service transmission interface and the derived interfaces, and packets to be transmitted by the plurality of interfaces are synchronously transmitted according to the packet forwarding weights. For example, the first service transmission interface creates two derived interfaces, and the packet forwarding weights of these three interfaces are the same. Then, in one packet transmission, the three interfaces respectively transmit 2G packets at the same time if 6G packets are able to be transmitted at one time. Alternatively, the service transmission of the second network slice is set as a first priority, the packets of the service of the second network slice are preferentially transmitted, and each derived interface shares the remaining bandwidth resources of the first service transmission interface according to the packet forwarding weight. For example, the bandwidth of the first service transmission interface is 6G, and the service of the second network slice needs 4G bandwidth for packet transmission, then the derived interface shares the remaining 2G bandwidth according to their respective packet forwarding weights for synchronous packet transmission. Alternatively, the service transmission of the second network slice is set to the first priority. First, only the packets of the second network slice service are transmitted. After the packets of the service of the second network slice are transmitted, the bandwidth resources are allocated to respective network slices bound to the derived interfaces according to the packet forwarding weights of the derived interfaces. When it is detected that the packets of the second network slice need to be transmitted, the packet transmission of the network slice bound to each derived interface is suspended. After the packets of the service of the second network slice have been transmitted via the first service transmission interface, the packet transmission of the network slice bound to each derived interface is resumed.

In practical application, the number of created derived interfaces and the allocation of packet forwarding weights of the derived interfaces may be determined according to actual situations. For example, the number of created derived interfaces may be 3, 4, 5, etc., and the packet forwarding weights of the derived interfaces may be set to 1, 2, 3, etc., in descending order. In this embodiment, the setting of the number of created derived interfaces and the packet forwarding weights is not limited.

A schematic diagram of a network slice packet transmission and processing flow is shown in FIG. 2. After a packet is received from a physical interface, characteristic data of the packet is queried, and an outbound interface of the packet is queried. According to the queried outbound interface of the packet and a target slice or destination address, a derived interface for the packet transmission is configured with a MAC address, an IP address, or another network unique characteristic identifier configured to indicate a destination address of the packet transmission, so as to guide the packet transmission. The packets to be transmitted by the network slice are transmitted to the destination address or the target network slice, and then the target network slice transmits the received packets to a corresponding service for corresponding processing. In response to detecting that the characteristic data of a packet does not include the target slice or the destination address, the packet is discarded.

This embodiment provides a network slice packet transmission method, in which the derived interface of the first service transmission interface bound to the second network slice is bound to the first network slice. When the packet transmission of the first network slice is performed, the packets to be transmitted by the first network slice are transmitted via the derived interface by using the bandwidth of the first service transmission interface that is not occupied by the service of the second network slice according to the packet forwarding weight of the derived interface, thereby realizing sharing of the bandwidth resource of the first service transmission interface. The bandwidth resource of the first service transmission interface that is not occupied by the second network slice service is used via the derived interface, thereby improving the utilization rate of the bandwidth resource of the first service transmission interface. When there are a plurality of derived interfaces, at least one derived interface is selected for packet transmission according to the bandwidth required for the packet transmission of the network slice, which ensures the packet transmission efficiency of the network slice and improves the utilization rate of the bandwidth resource.

A second embodiment of the present invention relates to a network slice packet forwarding method. The second embodiment is substantially the same as the first embodiment. In this embodiment, when a logical interface bound to a first network slice includes not only at least one derived interface but also a second service transmission interface, the network slice preferentially performs packet transmission via the second service transmission interface. When the utilization rate of the bandwidth resource of the second service transmission interface becomes too high, the derived interface performs auxiliary packet transmission to ensure the stability of the packet transmission while improving the efficiency of the packet transmission through the auxiliary packet transmission of the derived interface.

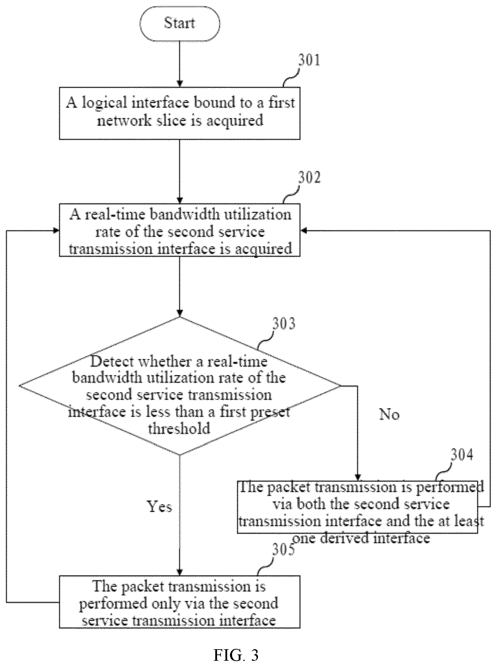

A specific flowchart of the network slice packet transmission method in this embodiment is shown in FIG. 3, which includes the following operations.

In 301, a logical interface bound to a first network slice is acquired.

Specifically, after acquiring the logical interface bound to the first network slice, it is detected whether the logical interface includes a second service transmission interface. It is determined which specific transmission interfaces are included in the logical interface, and then the packet transmission interfaces included in the logical interface are selected for the packet transmission according to a preset packet transmission policy.

In 302, a real-time bandwidth utilization rate of the second service transmission interface is acquired.

Specifically, when it is detected that the logical interface bound to the first network slice includes both the second service transmission interface and the at least one derived interface, the bandwidth utilization rate of each packet transmission interface is determined with reference to the allocated bandwidth of each packet transmission interface through statistics of packet transmission data of each packet transmission interface included in the logical interface within a preset duration.

In an example, a respective packet number counter is created for the at least one derived interface and the second service transmission interface bound to the network slice in advance, the packet number counter is configured to count the number of packets transmitted by the derived interface and by the second service transmission interface within the preset duration, and each time a new packet data transmission is detected, the packet number counter increases by 1. For example, the number of packets transmitted at the packet transmission interface within 10s is counted, and a statistics result of the packet transmission at the packet transmission interface is converted into bps (bits per second) according to the number of the transmitted packets. The converted data is an actual occupied bandwidth of the packet transmission interface, and the real-time bandwidth utilization rate of the packet transmission interface is determined further with reference to the allocated bandwidth of the packet transmission interface.

In practical application, the preset duration may be set according to actual situations, for example, may be set to 5s, 8s, 12s, 15s, etc., and the duration set in the packet transmission statistics process is not limited in this embodiment.

In another example, a respective packet bit bandwidth counter is created for the at least one derived interface and the second service transmission interface bound to the network slice in advance, and the packet transmission data within the preset duration of the packet transmission interface is monitored through the packet bit bandwidth counter. For each time the packet transmission interface sends a packet, the packet bit bandwidth counter superimposes its own bit statistical data according to the number of bytes of the packet sent by the packet transmission interface, converts the accumulated number of bytes counted within the preset duration into bps, determines the actual occupied bandwidth of the packet transmission interface, and determines the real-time bandwidth utilization rate of the packet transmission interface further with reference to the allocated bandwidth of the packet transmission interface.

In practical application, how to determine the bandwidth utilization rate of the packet transmission interface may be determined according to actual situations. In this embodiment, the method for calculating the real-time bandwidth utilization rate is not limited.

In 303, it is detected whether a real-time bandwidth utilization rate of the second service transmission interface is less than a first preset threshold. In response to the real-time bandwidth utilization rate of the second service transmission interface being less than the first preset threshold, the operation 305 is executed. In response to the real-time bandwidth utilization rate of the second service transmission interface being greater than or equal to the first preset threshold, the operation 304 is executed.

Specifically, after acquiring the logical interface bound to the first network slice, it is detected whether the logical interface includes the second service transmission interface. In response to the logical interface including the second service transmission interface, the packet transmission is preferentially performed via the second service transmission interface, which includes the following operations. That is, it is detected whether a bandwidth utilization rate of the second service transmission interface is less than the first preset threshold. In response to the bandwidth utilization rate of the second service transmission interface being less than the first preset threshold, the operation 305 is executed to perform the packet transmission only via the second service transmission interface. In response to the bandwidth utilization rate of the second service transmission interface being greater than or equal to the first preset threshold, the operation 304 is executed to perform the packet transmission via both the second service transmission interface and the at least one derived interface.

In an example, the first preset threshold of the bandwidth utilization rate is 80%. Before the packet transmission, the real-time bandwidth utilization rate of the second service transmission interface is detected. In response to detecting that the real-time bandwidth utilization rate of the second service transmission interface is 90%, i.e., the real-time bandwidth utilization rate is greater than the first preset threshold, it is determined that the transmission capacity of the second service transmission interface is low, and the operation 304 is executed. In response to detecting that the real-time bandwidth utilization rate of the second service transmission interface is 65%, it is determined that the transmission capability of the second service transmission interface is good, and the operation 305 is executed.

In 304, the packet transmission is performed via both the second service transmission interface and the at least one derived interface.

Specifically, during the packet transmission of the first network slice, a current packet transmission rate of the packet transmission interface is maintained in response to the real-time bandwidth utilization rate of the packet transmission interface being greater than the second preset threshold. A part of the packets to be transmitted that are unable to be transmitted in time by the second service transmission interface are sent to the derived interface for transmission, and the process returns back to the operation of monitoring the real-time bandwidth utilization rate of the second service transmission interface. The packet transmission is performed only via the second service transmission interface in response to the real-time bandwidth utilization rate of the second service transmission interface being less than or equal to the first preset threshold.

In 305, the packet transmission is performed only via the second service transmission interface.

Specifically, during the packet transmission of the first network slice, the packet transmission is performed only via the second service transmission interface in response to detecting that the real-time bandwidth utilization rate of the second service transmission interface is less than or equal to the first preset threshold, and it is continuously monitored whether the real-time bandwidth utilization rate of the second service transmission interface is greater than the first preset threshold. A part of the packets to be transmitted that are unable to be transmitted in time by the second service transmission interface are sent to the derived interface for transmission in response to the real-time bandwidth utilization rate of the second service transmission interface being greater than the first preset threshold.

In practical application, the first preset threshold may be set according to actual situations. For example, the value of the first preset threshold may be 75%, 78%, 85%, etc., which is not limited in this embodiment.

This embodiment provides a network slice packet transmission method, in which the second service transmission interface bound to the first network slice is preferentially used for the packet transmission during the packet transmission of the first network slice, so as to ensure the stability of the packet transmission. When the real-time bandwidth utilization rate of the second service transmission interface is too high, the packets to be transmitted that are unable to be transmitted in time are transmitted via the derived interface, thereby ensuring the efficiency of the packet transmission and making full use of the idle bandwidth of the first service transmission interface.

A third embodiment of the present invention relates to a network slice packet transmission method. This embodiment is substantially the same as the second embodiment. In this embodiment, after a packet transmission interface of a network slice is determined and the before packet transmission, a real-time bandwidth utilization rate of the packet transmission interface is detected, and delayed transmission is performed on packets to be transmitted in response to detecting that the real-time bandwidth utilization rate of the packet transmission interface is greater than a second preset threshold, so as to avoid data loss.

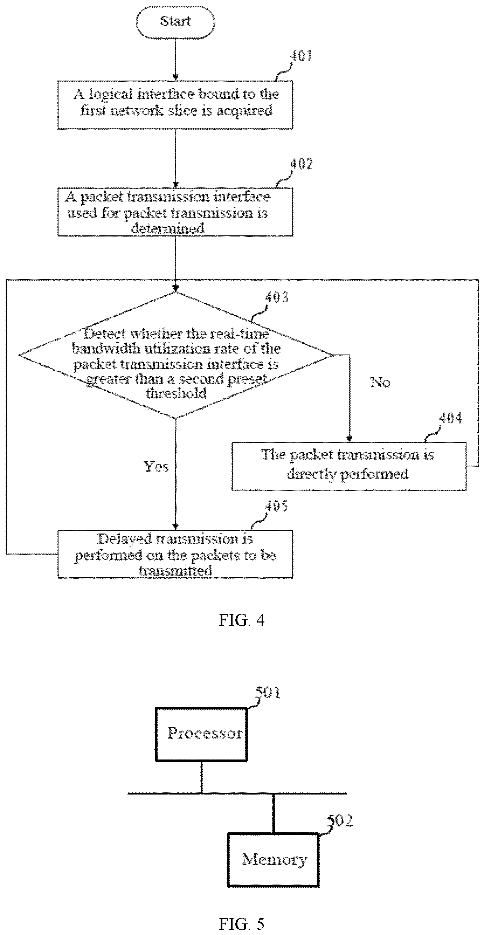

A specific flowchart of the network slice packet transmission method in this embodiment is shown in FIG. 4, which includes the following operations.

In 401, a logical interface bound to the first network slice is acquired.

The operation 401 of this embodiment is similar to the operation 101 of the first embodiment, and details are not described herein.

In 402, a packet transmission interface used for packet transmission is determined.

Specifically, after acquiring the logical interface bound to the first network slice, it is detected which interfaces are included in the logical interface. According to the type of at least one packet transmission interface included in the logical interface and the real-time bandwidth utilization rate of the at least one packet transmission interface, which packet transmission interface used for the packet transmission of the first network slice is determined.

In 403, it is detected whether the real-time bandwidth utilization rate of the packet transmission interface is greater than a second preset threshold. In response to the real-time bandwidth utilization rate of the packet transmission interface being greater than the second preset threshold, the operation 405 is executed. In response to the real-time bandwidth utilization rate of the packet transmission interface being less than or equal to the second preset threshold, the operation 404 is executed.

Specifically, after determining the packet transmission interface of the network slice, it is detected whether the real-time bandwidth utilization rate of the packet transmission interface is greater than the second preset threshold. The packet transmission interface is the second service transmission interface or the derived interface for the packet transmission. In response to the real-time bandwidth utilization rate of the packet transmission interface being greater than the second preset threshold, the operation 405 is executed to maintain a current packet transmission rate of the packet transmission interface and perform delayed transmission on the packets to be transmitted. In response to the real-time bandwidth utilization rate of the packet transmission interface being less than or equal to the second preset threshold, the operation 404 is executed.

In an example, the second preset threshold of the real-time bandwidth utilization rate of the packet transmission interface is 85%. In response to detecting that the real-time bandwidth utilization rate of the packet transmission interface is 75%, it is determined that the remaining available bandwidth of the packet transmission interface is large, and the operation 304 is executed. In response to detecting that the real-time bandwidth utilization rate of the packet transmission interface is 88%, it is determined that the remaining available bandwidth of the packet transmission interface is small, and the operation 405 is executed.

In practical application, the second preset threshold may be set according to actual situations. For example, a specific value of the second preset threshold may be 75%, 78%, 85%, etc., which is not limited in this embodiment.

In 404, the packet transmission is directly performed.

Specifically, in response to the real-time bandwidth utilization rate of the packet transmission interface being less than or equal to the second preset threshold, all packets to be transmitted are directly transmitted via the packet transmission interface, and it is continuously monitored whether the real-time bandwidth utilization rate of the packet transmission interface is greater than the second preset threshold.

In 405, delayed transmission is performed on the packets to be transmitted.

Specifically, in response to the real-time bandwidth utilization rate of the packet transmission interface being greater than the second preset threshold, a current packet transmission rate of the packet transmission interface is maintained, the delayed transmission is performed on the packets to be transmitted, and the packets to be transmitted are buffered into a pre-created packet buffer. It is continuously monitored whether the real-time bandwidth utilization rate of the packet forwarding interface is greater than the second preset threshold, and the buffered packets are transmitted according to a buffering order of the buffered packets in response to detecting that the real-time bandwidth utilization rate being less than or equal to the second preset threshold.

In an example, one packet transmission of the network slice needs to transmit 12G packets, the second preset threshold of the real-time bandwidth utilization rate is 85%, and the capacity of packets able to be transmitted in one packet transmission of the packet transmission interface is 10G. In a case where a current transmission process of the packet transmission interface has already transmitted 9G packets, the real-time bandwidth utilization rate is 90%, which is obviously greater than 85%. The remaining available bandwidth of the packet transmission interface is small, so the current transmission rate of the packet transmission interface is maintained. 9G packets are continuously transmitted in each packet transmission process, the remaining 3G packets that are unable to be transmitted in time are buffered in the pre-created packet buffer, and the real-time bandwidth utilization rate of the packet transmission interface is monitored. In response to detecting at a certain moment that the capacity of packets transmitted by the packet transmission interface at a single time is lower than 8.5G, a part of buffered packets are read according to the packet buffering order for transmission, and the real-time bandwidth utilization rate of the packet transmission interface is monitored.

In another example, during buffering the packets, the packets to be buffered are stored into respective buffer sub-intervals corresponding to the packets according to characteristic data of the packets and correspondences between preset types of the characteristic data and the buffer sub-intervals. The buffer sub-intervals are N sub-intervals generated in advance in the pre-created packet buffer according to the preset types of the characteristic data of the packets, each of the buffer sub-intervals is configured with a preset read weight, and N is an integer greater than 1. Packets in each of the buffer sub-intervals are transmitted in the buffering order according to the preset read weight of each of the buffer sub-intervals in response to detecting that the real-time bandwidth utilization rate being less than or equal to the second preset threshold. The preset read weight is a percentage of packets able to be transmitted of each of the buffer sub-intervals in single data transmission or a packet transmission priority of each of the buffer sub-intervals in the single data transmission. For example, before the packet transmission, the packets to be transmitted are detected and classified in advance. The packets are classified into five types according to the characteristic data of the packets, so the packet buffer is divided into five buffer sub-intervals, and each buffer sub-interval stores one type of packets. In response to detecting that the real-time bandwidth utilization rate of the packet transmission interface is greater than the second preset threshold, the transmission rate of the packet transmission interface is maintained to continue to transmit a part of the packets to be transmitted, and the characteristic data of the packets to be transmitted that are unable to be transmitted in time is detected. The packets are buffered into respective buffer sub-intervals corresponding to the packets according to correspondences between the characteristic data and the buffer sub-intervals. In response to detecting that the real-time bandwidth utilization rate of the packet transmission interface is less than or equal to the second preset threshold, the buffered packets are transmitted in the buffering order according to the preset read weights of the buffer sub-intervals.

In a case where the preset read weight of each buffer sub-interval is the percentage of packets able to be transmitted of each buffer sub-interval in single data transmission, the percentage of packets able to be transmitted of each buffer sub-interval is acquired. The bandwidth for the packets able to be transmitted is allocated to each buffer sub-interval according to the percentage of packets able to be transmitted of each buffer sub-interval, and the buffered packets are transmitted according to the bandwidth for the packets able to be transmitted. For example, three buffer sub-intervals are provided, in which a percentage of the packets able to be transmitted of a sub-interval 1 is 40%, a percentage of the packets able to be transmitted of a sub-interval 2 is 30%, and a percentage of the packets able to be transmitted of a sub-interval 3 is 30%. In response to detecting at a certain time that the available bandwidth of the packet transmission interface is 10G, based on the buffering order of the packets, 4G packets first buffered in the sub-interval 1 are read, 3G packets first buffered in the sub-interval 2 are read, 3G packets first buffered in the sub-interval 2 are read, and the read packets in the three sub-intervals are transmitted.

In practical application, the number of buffer sub-intervals and the percentage of packets able to be transmitted of each buffer sub-interval may be set according to actual situations. For example, the number of buffer sub-intervals may be set to 2, 4, 5, 6, etc., and the percentage of packets able to be transmitted of each buffer sub-interval may be set to 20%, 50%, 65%, etc. (a sum of values of the percentage set for each buffer sub-interval is 1), and the setting of the buffer sub-interval is not limited in this embodiment.

In a case where the preset read weight of each buffer sub-interval is the packet transmission priority of each buffer sub-interval in the single data transmission, the packet transmission priority of each buffer sub-interval is acquired, and packets in a part of the buffer sub-intervals are preferentially transmitted according to the packet transmission priorities. For example, three buffer sub-intervals are provided, a priority of the sub-interval 1 is the highest and a priority of the sub-interval 3 is the lowest. In response to detecting at a certain time that the available bandwidth of the packet transmission interface is 5G, the buffered packets in the sub-interval 1 are read according to the buffering order of the packets, and the packets in the sub-interval 1 are preferentially transmitted in this packet transmission. In response to the buffer packets in the sub-interval 1 being 3G, all the packets in the sub-interval 1 are read, and then the packets in the sub-interval 2 are read until the read packets reach the limit of the available bandwidth for single packet transmission, and then the read packets are transmitted. After the transmission, the packets to be transmitted are read again according to the priority for transmission.

In practical application, a sub-interval of the highest priority may be set in the N pre-created sub-intervals, the packets in the sub-interval of the highest priority may be preferentially read and transmitted, and the remaining sub-intervals may be transmitted according to the proportion of the available bandwidth. When transmitting the packets in the sub-intervals other than the sub-interval of the highest priority, the transmission of the packets in these sub-intervals are suspended in response to detecting that the sub-interval of the highest priority has packets to be transmitted, and the packets in the sub-interval of the highest priority are transmitted. After the transmission of the packets in the sub-interval of the highest priority is completed, the transmission of the packets in the remaining sub-intervals are resumed. The method for transmitting the buffered packets is not limited in this embodiment.

This embodiment provides a network slice packet transmission method, in which the real-time bandwidth utilization rate of the packet transmission interface is detected before performing the packet transmission via the packet transmission interface, delayed transmission is performed on packets to be transmitted by the packet transmission interface with high real-time bandwidth utilization rate, and some packets that are unable to be transmitted in time are buffered. When the real-time bandwidth utilization rate of the packet transmission interface is no longer too high, the buffered packets are transmitted, thereby avoiding a problem that the packets are easily lost when the bandwidth utilization rate is too high by the delayed transmission, and using the bandwidth resources of the packet transmission interface as much as possible. The packet transmission is performed according to the packet read weights of the buffer sub-intervals, which ensures the priority transmission of important packets, thereby avoiding excessive transmission delay of important packets and ensuring the user experience.

For the sake of clarity of description, the operations of the above methods may be combined into one operation or certain operations may be split into multiple operation, which are within the protection scope of the present invention as long as they include the same logical relationship. Irrelevant modifications or irrelevant designs added to the algorithm or process without changing a core design of the algorithm and process are within the protection scope of the present invention.

A fourth embodiment of the present invention relates to an electronic device, as shown in FIG. 5, including at least one processor, and memory communicatively coupled to the at least one processor. The memory stores instructions executable by at least one processor which, when executed by the at least one processor, cause the at least one processor to perform the network slice packet transmission method described above.

The memory and the at least one processor are connected by means of bus, the bus may include any number of interconnected buses and bridges, and the bus connect various circuits of the at least one processor and the memory together. The bus may also connect together various other circuits such as peripheral devices, voltage regulators, and power management circuits, all of which are well known in the art, and therefore are not further described herein. A bus interface provides an interface between the bus and a transceiver. The transceiver may be an element or a plurality of elements, such as a plurality of receivers and transmitters for providing units for communicating with various other devices on a transmission medium. The data processed by the at least one processor is transmitted over a wireless medium via antennas, and the antennas further receive the data and transmit the data to the at least one processor.

The at least one processor is responsible for managing the bus and general processing, and may also provide various functions, including timing, peripheral interfaces, voltage regulation, power management, and other control functions. The memory may be configured to store data used by the at least one processor in performing operations.

A fifth embodiment of the present invention relates to a computer readable storage medium storing a computer program that, when executed by at least one processor, causes the at least one processor to perform the network slice packet transmission method described above.

That is, it should be understood by those skilled in the art that all or a portion of the operations in the method embodiments described above may be implemented by a program instructing relevant hardware. The program is stored in a storage medium, which includes several instructions to cause a device (which may be a single chip microcomputer, a chip, or the like) or a processor to perform all or a portion of the operations of the method in the embodiments described herein. The foregoing storage medium includes a USB flash drive, a removable hard disk, read-only memory (ROM), random access memory (RAM), a magnetic disk, an optical disk, or any other medium that is able to store program codes.

Those of ordinary skill in the art should appreciate that the above embodiments are specific embodiments of the present invention, and that various changes may be made in form and detail in practical application without departing from the spirit and scope of the present invention.

## Claims

1. A network slice packet transmission method, comprising:
acquiring a logical interface bound to a first network slice, wherein the logical interface comprises at least one derived interface, and the at least one derived interface is at least one interface derived from a first service transmission interface bound to a second network slice; and
performing packet transmission of the first network slice using an idle bandwidth of the first service transmission interface via the at least one derived interface.

2. The network slice packet transmission method according to claim 1, wherein performing the packet transmission of the first network slice using the idle bandwidth of the first service transmission interface via the at least one derived interface comprises:
detecting a packet forwarding weight of each of the at least one derived interface; and
performing the packet transmission according to the packet forwarding weight;
wherein the packet forwarding weight is an occupancy priority or an occupancy ratio to the idle bandwidth of each of the at least one derived interface in the at least one derived interface created by the first service transmission interface.

3. The network slice packet transmission method according to claim 2, wherein detecting the packet forwarding weight of each of the at least one derived interface comprises:
detecting whether the logical interface comprises a plurality of derived interfaces; and
acquiring the packet forwarding weight of each of the plurality of derived interfaces in response to the logical interface comprising the plurality of derived interfaces;
and wherein performing the packet transmission according to the packet forwarding weight comprises:
determining an available transmission bandwidth of each of the plurality of derived interfaces according to the packet forwarding weight of each of the plurality of derived interfaces;
selecting at least one derived interface according to the available transmission bandwidth of each of the plurality of derived interfaces; and
performing the packet transmission according to the available transmission bandwidth of each of the selected at least one derived interface.

4. The network slice packet transmission method according to claim 1, wherein after acquiring the logical interface bound to the first network slice, the method further comprises:
detecting whether the logical interface further comprises a second service transmission interface; and
preferentially performing the packet transmission via the second service transmission interface in response to the logical interface comprising the second service transmission interface.

5. The network slice packet transmission method according to claim 4, wherein preferentially performing the packet transmission via the second service transmission interface comprises:
detecting whether a real-time bandwidth utilization rate of the second service transmission interface is less than a first preset threshold;
performing the packet transmission only via the second service transmission interface in response to the real-time bandwidth utilization rate of the second service transmission interface being less than the first preset threshold; and
performing the packet transmission via both the second service transmission interface and the at least one derived interface in response to the real-time bandwidth utilization rate of the second service transmission interface being greater than or equal to the first preset threshold.

6. The network slice packet transmission method according to claim 4 or claim 5, wherein before performing the packet transmission, the method further comprises:
detecting whether a real-time bandwidth utilization rate of a packet transmission interface is greater than a second preset threshold, wherein the packet transmission interface comprises one or both of the second service transmission interface and the at least one derived interface for the packet transmission;
maintaining a current packet transmission rate of the packet transmission interface in response to the real-time bandwidth utilization rate of the packet transmission interface being greater than the second preset threshold; and
performing delayed transmission on packets to be transmitted.

7. The network slice packet transmission method according to claim 6, wherein performing the delayed transmission on the packets to be transmitted comprises:
buffering the packets to be transmitted into a pre-created packet buffer; and
transmitting the buffered packets according to a buffering order of the buffered packets in response to detecting that the real-time bandwidth utilization rate being less than or equal to the second preset threshold.

8. The network slice packet transmission method according to claim 7, wherein buffering the packets to be transmitted into the pre-created packet buffer comprises:
storing the packets to be buffered into respective buffer sub-intervals corresponding to the packets according to characteristic data of the packets and correspondences between preset types of the characteristic data and the buffer sub-intervals, wherein the buffer sub-intervals are N sub-intervals generated in advance in the pre-created packet buffer according to the preset types of the characteristic data of the packets, each of the buffer sub-intervals is configured with a preset read weight, and N is an integer greater than 1; and
transmitting packets in each of the buffer sub-intervals in the buffering order according to the preset read weight of each of the buffer sub-intervals in response to detecting that the real-time bandwidth utilization rate being less than or equal to the second preset threshold;
wherein the preset read weight is a percentage of packets able to be transmitted of each of the buffer sub-intervals in single data transmission or a packet transmission priority of each of the buffer sub-intervals in the single data transmission.

9. An electronic device comprising:
at least one processor; and
memory communicatively coupled to the at least one processor;
wherein the memory stores instructions executable by the at least one processor which, when executed by the at least one processor, cause the at least one processor to perform the network slice packet transmission method according to any one of claims 1 to 8.

10. A computer readable storage medium storing a computer program that, when executed by at least one processor, causes the at least one processor to perform the network slice packet transmission method according to any one of claims 1 to 8.
